(19) Europäisches Patentamt
European Patent Office
Office européen des brevets

(11) **EP 2 214 344 B1**

(12) # EUROPEAN PATENT SPECIFICATION

(45) Date of publication and mention
of the grant of the patent:
**07.11.2012 Bulletin 2012/45**

(51) Int Cl.:
**H04L 12/24** *(2006.01)*    **H04Q 11/00** *(2006.01)*

(21) Application number: **09724447.9**

(22) Date of filing: **27.03.2009**

(86) International application number:
**PCT/CN2009/071037**

(87) International publication number:
**WO 2009/117969 (01.10.2009 Gazette 2009/40)**

(54) **METHOD AND SYSTEM FOR REDUCING SWITCH DELAY OF MAIN AND SPARE OPTICAL LINE TERMINATION**

VERFAHREN UND SYSTEM ZUR REDUZIERUNG DER VERMITTLUNGSVERZÖGERUNG OPTISCHER HAUPT- UND RESERVELEITUNGSABSCHLÜSSE

PROCÉDÉ ET SYSTÈME POUR RÉDUIRE UN RETARD DE COMMUTATION DE TERMINAISON DE LIGNE OPTIQUE PRINCIPALE ET DE SECOURS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.03.2008   CN 200810084160**

(43) Date of publication of application:
**04.08.2010   Bulletin 2010/31**

(73) Proprietor: **Huawei Technologies Co., Ltd.
Longgang District, Shenzhen
Guangdong 518129 (CN)**

(72) Inventor: **ZHENG, Ruobin
518129 Shenzhen (CN)**

(74) Representative: **Pfenning, Meinig & Partner GbR
Patent- und Rechtsanwälte
Theresienhöhe 13
80339 München (DE)**

(56) References cited:
**CN-A- 1 471 243       CN-A- 101 087 174
US-A1- 2002 071 149**

- XU D J ET AL: "Proposal of a new protection mechanism for ATM PON interface", ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 7, 11 June 2001 (2001-06-11), pages 2160-2165, XP010553700, ISBN: 978-0-7803-7097-5

**Description**

FIELD OF THE INVENTION

The present invention relates to the field of optical communications, and more particularly to a method, a system, and an extender box for reducing a switch delay of active and standby optical line terminals (OLTs).

BACKGROUND OF THE INVENTION

The passive optical network (PON) technology is a point-to-multipoint optical access technology. A PON is formed of an optical line terminal (OLT), an optical splitter, optical network units (ONUs), and optical fibers for connecting the devices. The OLT is an office end device, which is connected to the optical splitter through a backbone optical fiber. The optical splitter is connected to each ONU through a respective branch optical fiber. In a downlink direction, the optical splitter implements an optical splitting function, and downlink optical signals of the OLT are sent to all ONUs through the branch optical fibers. In an uplink direction, the optical splitter implements a function of converging optical signals, and the optical signals sent by all ONUs are converged and sent to the OLT through the backbone optical fiber.

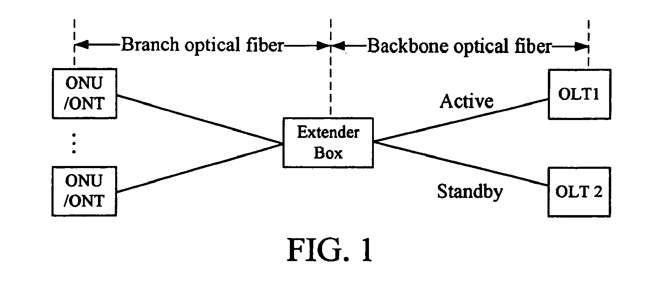

In order to support long-distance data transmission between the OLT and the ONUs, the optical signals in the optical fibers need to be amplified, so that a long reach PON (LR-PON) is derived. FIG. 1 is a network structure chart of the PON. As shown in FIG. 1, an optical amplifier (OA) is added in an optical transmission path. Usually, the optical splitter and the OA can be integrated in the same device, which is referred to as an extender box (EB).

In order to ensure that the LR-PON network can maintain service provisions when failures occur to the OLT devices or the optical fibers, the LR-PON network supports the protection function. As shown in FIG. 1, protection modes of the backbone optical fiber and OLT devices are supported. Two OLT devices serving as backup for each other are connected to the optical splitter through independent backbone optical fibers. In normal situations, only an active OLT communicates with the ONUs through the active backbone optical fiber. When the system detects failures of the active OLT device or the active backbone optical fiber, the system switches to communication with the ONUs through a standby OLT device and a standby backbone optical fiber, so as to maintain the service provisions when failures occur to the network.

For a PON using a Time Division Multiple Access (TDMA) mode in the uplink, the transmission of all uplink data is controlled by the OLT. When the a logic distance difference between the ONUs is up to 20 km, a difference between a transmission delay from the nearest ONU to the OLT and a transmission delay from the farthest ONU to the OLT may reach 100 $\mu$s. In order to avoid collision of uplink burst data from different ONUs, the OLT needs to perform ranging on a relative distance between each ONU and the OLT according to round trip transmission delays. Through the ranging and delays, uplink sending time for each ONU is adjusted, so that the time of reaching the OLT is consistent for all the ONUs.

When a failure occurs to an optical fiber between the active OLT and an ONU, both the OLT and the ONU detect loss of signal (LOS) alarms as the OLT and the ONU are unable to receive signals from each other. After the ONU detects the LOS alarm, the ONU switches from a normal OPERATION state to a POPUP state. When the active OLT detects the LOS alarm, it indicates that the failure occurs to the active backbone optical fiber, and the switching between the active and standby OLTs is needed, so all the ONUs are switched to the standby OLT, and the original standby OLT is switched to become the active OLT.

As the active and standby backbone optical fibers have different lengths, an equalized delay (EqD) value of the ONU after the switching of the active and standby backbone optical fibers also becomes different. The ranging process needs to be performed again after the active and standby switching. A method for re-ranging after the active and standby switching is disclosed in the existing Gigabit PON (GPON) standard. The method includes following steps.

The new active OLT broadcasts POPUP messages to all ONUs, so as to instruct the ONUs to switch from a POPUP state to a RANGING state. The ranging of all ONUs starts.

After an ONUi receives the POPUP message, the ONUi returns a corresponding ranging response pulse to the new active OLT immediately.

A time difference between sending a ranging instruction and receiving a corresponding ranging response by the OLT is an optical fiber transmission delay Tiloop between the OLT and the ONUi. For the ONUi, in order to reach an equalized loop delay, a control delay Tdi =Teqd-Tiloop needs to be inserted.

The OLT adds the control delay Tdi in downlink information, and transfers the downlink information to the ONUi.

The ONUi adjusts its own sending time accordingly.

After the OLT performs the above operations on all ONUs in sequence, collision of uplink signals can be avoided.

The following problems in the above-described method have become apparent.

The above ranging of ONUs is performed serially, that is, the OLT performs ranging on a next ONU only after the ranging of a previous ONU is completed. The service transmission between the ONU and OLTs is recovered after the ONU ranging is completed. Therefore, a service interruption duration caused by the failure of the backbone optical fiber is:

$$\text{service interruption duration} = \text{LOS detection duration} + \text{switching-decision}$$
$$\text{execution duration} + N \times \text{ONU ranging duration}.$$

Here, N is the number of ONUs connected to one OLT. Therefore, the duration for re-ranging of the ONUs is the longest in the whole service interruption duration. If ranging duration for each ONU is about 1 ms, for the LR-PON in which 64 to 1024 ONUs are connected to one OLT, the service interruption duration exceeds 50 ms. Usually, for bearer TDM services of the LR-PON, it is required that the service interruption duration is shorter than 50 ms. Otherwise, normal communication and services are affected.

US Patent Publication No. 2002/071149 discloses a method and apparatus for protecting faults in an optical network. Protection based on 1:n protection at an OLT. Each working interface module in the OLT is coupled via a fiber to a 2:N splitter which provides communication with N ONUs. A protection interface module is coupled via a fiber to a 1:n switch whose output is coupled to each of the 2:N splitters. In the event of a fiber break, protection switching is performed by forming a backup link to the 2:N splitter associated with the failed fiber through the protection interface module. The I:n protection arrangement may be replicated and extended to a g*(1:n) protection arrangement. A uni-ranging process speeds up protection switching by ranging only one ONU associated with a failed fiber, rather than all ONUs associated with a failed fiber. However, the disclosure of US Patent Publication No. 2002/071149 does not meet the requirement of service interruption duration shorter than 50 ms.

SUMMARY OF THE INVENTION

In order to shorten service recovery duration during switching of active and standby optical line terminals (OLTs), the present invention is directed to a method, a system, and an extender box for reducing a switch delay of active and standby OLTs. The technical solutions are as follows.

As a first aspect the present invention provides a method for reducing a switch delay of active and standby OLTs. An active embedded optical network terminal (ONT) and a standby embedded ONT are configured in an extender box in an optical transmission path between the active and standby OLTs and a plurality of optical network units (ONUs), the active embedded ONT and the standby embedded ONT support ranging function. The active embedded ONT is connected to an active OLT through an active backbone optical fiber. The standby embedded ONT is connected to a standby OLT through a standby backbone optical fiber. The method includes following steps. The standby OLT receives first round trip delays (Rtds) to the ONUs and a second Rtd to the active embedded ONT from the active OLT, the first Rtds and the second Rtd are pre-obtained by the active OLT through ranging on the ONUs and the active embedded ONT respectively. During switching between the standby OLT and the active OLT, the standby OLT obtains control delays of the ONUs according to a preset equalization loop delay, a pre-obtained third Rtd to the standby embedded ONT, the first Rtd, and the second Rtd, the third Rtd is pre-obtained by the standby OLT through ranging on the standby embedded ONT. The standby OLT distributes the control delays to the corresponding ONUs.

As a second aspect the present invention provides a system for reducing a switch delay of active and standby OLTs, which includes an active OLT, a standby OLT, an extender box, and a plurality of ONUs. The extender box includes an active embedded ONT and a standby embedded ONT, the active embedded ONT and the standby embedded ONT support ranging function. The active embedded ONT is connected to the active OLT through an active backbone optical fiber. The standby embedded ONT is connected to the standby OLT through a standby backbone optical fiber. The active OLT is adapted to perform ranging on the ONUs and the active embedded ONT to pre-obtain first round trip delays (Rtds) to the ONUs and a second Rtd to the active embedded ONT respectively, and send the pre-obtained first Rtds and second Rtd to the standby OLT during switching of the active OLT and the standby OLT. The standby OLT is adapted to receive the first Rtd and the second Rtd from the active OLT, perform ranging on the standby embedded ONT to pre-obtained a third Rtd to the standby embedded ONT, obtain control delays of the ONUs according to a preset equalized loop delay, the pre-obtained third Rtd, the first Rtds, and the second Rtd, and distribute the control delays to the corresponding ONUs.

In the present invention, an embedded ONT having a ranging function is configured in an optical transmission path, so that ranging of ONUs becomes unnecessary when a transmission path between the ONUs and an OLT is switched to a protection backbone optical fiber after a failure occurs to the active optical fiber, thus reducing a switch delay of active and standby OLTs to a certain degree, so as to satisfy the demand for a switch delay shorter than 50 ms in a long reach passive optical network (LR-PON) system, and avoid influences on normal services and communication.

BRIEF DESCRIPTION OF THE DRAWINGS

FIG. 1 is a network structure chart of a known PON;

FIG. 2 is a schematic view of EqD calculation principles according to an embodiment of the present invention;

FIG. 3 is a network structure chart of a PON according to an embodiment of the present invention;

FIG. 4 is a flow chart of a method for reducing a switch delay of active and standby OLTs according to an embodiment of the present invention;

FIG. 5 is a structural view of a system for reducing a switch delay of active and standby OLTs according to an embodiment of the present invention;

FIG. 6 is a structural view of another system for reducing a switch delay of active and standby OLTs according to an embodiment of the present invention;

FIG. 7 is a schematic view of a method for reducing a switch delay of active and standby OLTs according to an embodiment of the present invention;

FIG. 8 is a schematic view of another method for reducing a switch delay of active and standby OLTs according to an embodiment of the present invention;

FIG. 9 is a structural view of a third system for reducing a switch delay of active and standby OLTs according to an embodiment of the present invention;

FIG. 10 is a structural view of a fourth system for reducing a switch delay of active and standby OLTs according to an embodiment of the present invention; and

FIG. 11 is a structural view of a fifth system for reducing a switch delay of active and standby OLTs according to an embodiment of the present invention.

DETAILED DESCRIPTION OF THE EMBODIMENTS

In order to make the objectives, technical solutions, and advantages of the present invention more comprehensible, the embodiments of the present invention are further illustrated below in detail with reference to the accompanying drawings.

In the embodiments of the present invention, an active embedded optical network terminal (ONT) and a standby embedded ONT are configured in an extender box (EB) in an optical transmission path. When active and standby optical line terminals (OLTs) are switched, a control delay of each optical network unit (ONU) can be obtained according to round trip delays (Rtds) from the active and standby OLTs to the active embedded ONT and the standby embedded ONT. By distributing the obtained control delay to the corresponding ONU, the interrupted services are recovered. The active and standby embedded ONTs may be physically combined into one embedded ONT.

In the embodiments of the present invention, the ONU can be either an ONU or an ONT.

In an LR-PON in the TDMA uplink technology, in order to ensure that optical signals sent by all ONUs reach the OLT at the same time, when the ONUs send uplink data to the OLT, different sending delays are needed according to different distances to the OLT. The sending delay is referred to as an equalized delay (EqD). The OLT obtains an Rtd value from the OLT to the ONU through ranging on the ONU. An EqD value of the ONU is calculated based on the Rtd value. The EqD value is set in the ONU as a control delay

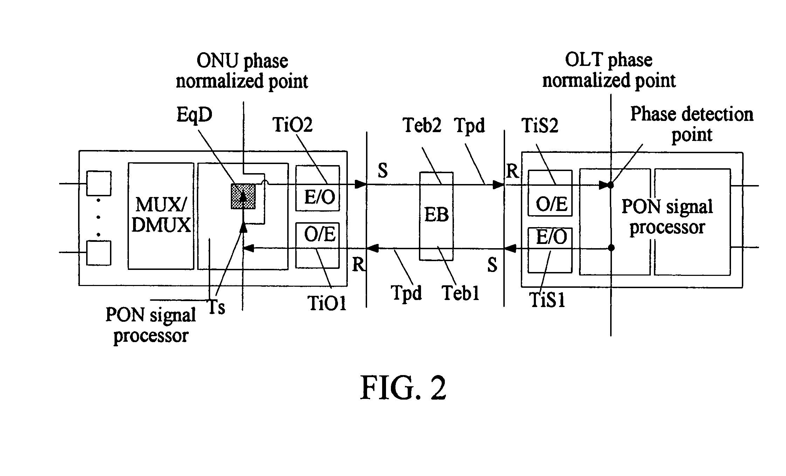

FIG. 2 is a schematic view of calculation principles of the EqD. Referring to FIG. 2, $Rtd = 2*Tpd + Ts + TiO1 + TiO2 + TiS1 + TiS2 + EqD + Teb$.

Here, Tpd is an optical fiber propagation delay, Ts is a basic transmission delay caused by PON signal processing by the ONU, the optical delay $(TiO1 + TiO2 + TiS1 + TiS2)$ is caused by optical-electrical or electrical-optical conversion, and Teb is a sum of uplink and downlink processing delays of the extender box, which may be regarded as a constant for each ONU.

A formula for calculating an EqD of the nth ONU is $EqD(n) = Teqd - Rtd(n)$.

Here, Teqd is an equalized Rtd, which is a constant when EqD=0, that is, the EqD value of the farthest ONU.

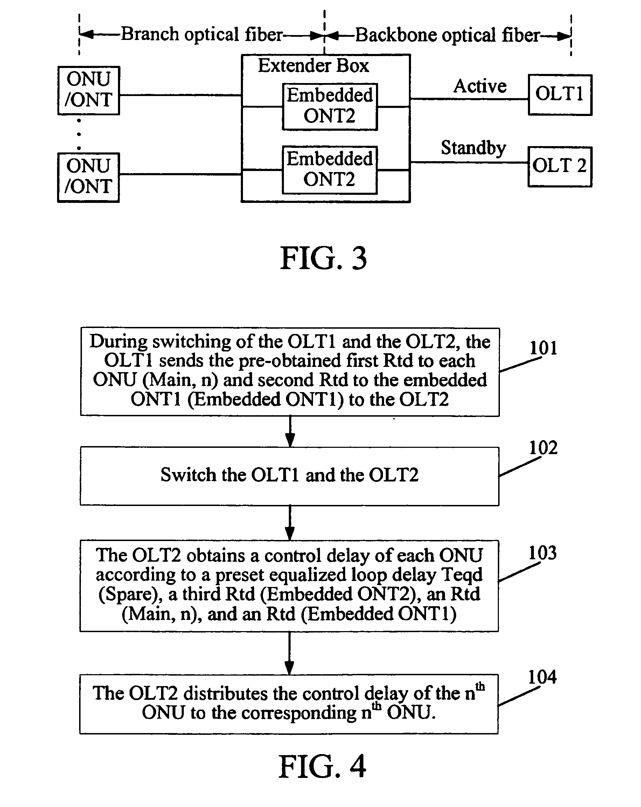

Referring to FIG. 3, a network structure of the PON includes a plurality of ONUs, an extender box, an active OLT1 and a standby OLT2. An active embedded ONT1 and a standby embedded ONT2 are configured in the extender box. The active embedded ONT1 is connected to the OLT1 through an active backbone optical fiber. The standby embedded ONT2 is connected to the OLT2 through a standby backbone optical fiber.

The active embedded ONT1 is adapted to receive a ranging message sent by the OLT1 and return a ranging response message to the OLT1.

The standby embedded ONT2 is adapted to receive a ranging message sent by the OLT2 and return a ranging response message to the OLT2.

For the ONU/ONT, Tpd = propagation delay of the branch optical fiber + propagation delay of the backbone optical fiber. For the same ONU, the Tpd to the active and standby OLTs are the same at the branch optical fiber segment, but in the backbone optical fiber segment, propagation delays of the backbone optical fiber are different due to different distances. For the embedded ONT1 and ONT2, Tpd = propagation delay of the backbone optical fiber.

For the $n^{th}$ ONU/ONT, a difference between Rtd values on the active and standby OLTs is a difference $\Delta$ of the propagation delay of the embedded ONT1 and ONT2 on the active and standby backbone optical fibers, that is

$$\Delta\ (n) = Rtd\ (Main,\ n) - Rtd\ (Spare,\ n)$$

$$= Rtd\ (Embedded\ ONT1) - Rtd\ (Embedded\ ONT2).$$

When the $n^{th}$ ONU/ONT is switched from the active OLT to the standby OLT, an EqD (control delay) of the ONU (n) on the standby OLT is

$$EqD\ (Spare,\ n) = Teqd\ (Spare) - Rtd\ (Spare,\ n)$$

$$= Teqd\ (Spare) - [Rtd\ (Main,\ n) - \Delta]$$

$$= Teqd\ (Spare) - \{Rtd\ (Main,\ n) - [Rtd\ (Embedded\ ONT1) - Rtd\ (Embedded\ ONT2)]\}.$$

Here, Teqd (Spare) is a preset equalized loop delay, which is a constant.

According to the foregoing analysis, referring to FIG. 4, the present invention provides a method for reducing a switch delay of active and standby OLTs, illustrated with the network structure provided in FIG. 3, in which the OLT1 is the active device, and the OLT2 is the standby device for the OLT1. The method includes following steps.

In step 101, during switching of the OLT1 and OLT2, the OLT1 sends the pre-obtained first Rtd to each ONU (Main, n) and second Rtd to the embedded ONT1 (Embedded ONT1) to the OLT2.

In step 102, the OLT1 and the OLT2 are switched.

In step 103, the OLT2 obtains a control delay EqD of each ONU (Spare, n) according to a preset equalized loop delay Teqd (Spare), a pre-obtained third Rtd (Embedded ONT2), a first Rtd (Main, n), and a second Rtd (Embedded ONT1).

In step 104, the OLT2 distributes the control delay EqD (Spare, n) of the $n^{th}$ ONU to the corresponding nth ONU.

Here, n=1, 2, ..., N, and the N is a total number of the ONUs. The ONUs may be the ONUs or ONTs.

The pre-obtained third Rtd (Embedded ONT2) in step 103 can be obtained before step 102 or after step 102. The method for reducing the switch delay of active and standby OLTs is briefly illustrated through the following two obtaining modes respectively.

In the first mode, after the active and standby OLTs are switched, the standby OLT obtains the third Rtd (Embedded ONT2).

   1. The active OLT performs ranging on all ONUs and the embedded ONT1 in the extender box, so as to obtain an Rtd (Main, n) and an Rtd (Embedded ONT1).

   2. In the process for switching active and standby OLTs, the active OLT informs the standby OLT of the Rtd (Main, n) and the Rtd (Embedded ONT1).

   3. After the active and standby OLTs are switched, the standby OLT performs ranging on the embedded ONT2 in the extender box, so as to obtain an Rtd (Embedded ONT2).

4. The standby OLT calculates an EqD of each ONU (Spare, n) after switching by comparing a difference between ranging results from the active and standby OLTs to the embedded ONT.

5. The standby OLT distributes the EqD (Spare, n) to the ONU. All ONUs enter a state of normal communication with the standby OLT.

In the second mode, before the switching of the active and standby OLTs, the standby OLT obtains the third Rtd (Embedded ONT2).

1. The active OLT performs ranging on all ONUs and the embedded ONT1 in the extender box, so as to obtain an Rtd (Main, n) and an Rtd (Embedded ONT1).

2. Before the switching, the standby OLT performs ranging on the embedded ONT2 in the extender box, so as to obtain an Rtd (Embedded ONT2).

3. In the process for switching the active and standby OLTs, the active OLT informs the standby OLT of the Rtd (Main, n) and the Rtd (Embedded ONT1).

4. After the switching of the active and standby OLTs, the standby OLT calculates an EqD (Spare, n) of each ONU after the switching by comparing a difference of ranging results of the embedded ONT by the active and standby OLTs.

5. The standby OLT distributes the EqD (Spare, n) to the ONU, and all ONUs enter a state of normal communication with the standby OLT.

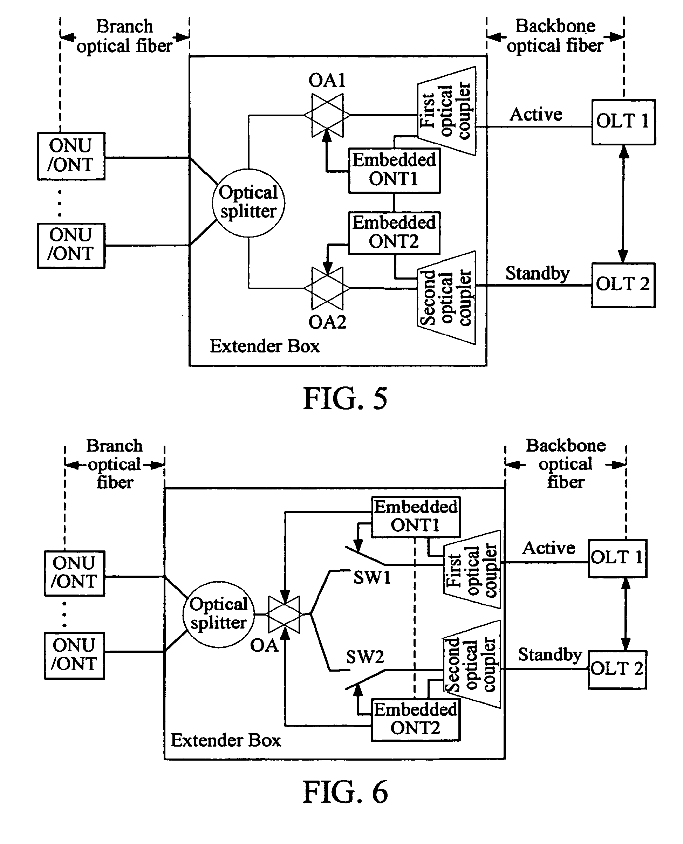

FIG. 5 is a schematic view of a system for reducing a switch delay of active and standby OLTs according to an embodiment of the present invention. The system includes a plurality of ONUs (ONU/ONTs), an extender box, an active OLT (OLT1), and a standby OLT (OLT2).
The extender box includes an embedded ONT1, an embedded ONT2, an optical splitter connecting a plurality of ONUs, a first amplifier OA1, a second amplifier OA2, a first optical coupler, and a second optical coupler.
The active embedded ONT is connected to the active OLT through an active backbone optical fiber, and the standby embedded ONT is connected to the standby OLT through a standby backbone optical fiber.
The optical splitter is adapted to converge optical signals sent by a plurality of ONUs into one optical signal, split the optical signal sent by the OA1 or OA2 into multiple optical signals, and send the multiple optical signals to a plurality of ONUs respectively.
A port of the OA1 is connected to the optical splitter, another port is connected to the first optical coupler, and the third port is connected to the embedded ONT1.
A port of the OA2 is connected to the optical splitter, another port is connected to the second optical coupler, and the third port is connected to the embedded ONT2.
The OA1 and OA2 are adapted to amplify the received optical signals and forward the amplified optical signals.
The first optical coupler is connected to the embedded ONT1.
The second optical coupler is connected to the embedded ONT2.
FIG. 6 is a schematic view of another system for reducing a switch delay of active and standby OLTs according to an embodiment of the present invention. The system includes a plurality of ONUs (ONU/ONTs), an extender box, an active OLT (OLT1), and a standby OLT (OLT2). The extender box includes an embedded ONT1, an embedded ONT2, an optical splitter connecting a plurality of ONUs, an amplifier, a first switch SW1, a second switch SW2, a first optical coupler, and a second optical coupler. The function of the optical splitter is the same as that of the optical splitter in FIG. 5. The extender box in this system only has one amplifier. A port of the amplifier is connected to the optical splitter, another port is connected to the SW1 and SW2, the third port is connected to the embedded ONT1, and the fourth port is connected to the embedded ONT2. When the active backbone optical fiber is normal, the embedded ONT1 drives the SW1 to be closed. When the active backbone optical fiber fails, the embedded ONT2 drives the SW2 to be closed.
The first optical coupler is connected to the embedded ONT1 and the SW1.
The second optical coupler is connected to the embedded ONT2 and the SW2.
The first optical coupler and the second optical coupler may also be replaced by optical add/drop multiplexers (OADM), which are adapted to couple the received optical signals. A part of optical signals are coupled and sent to the embedded ONT1 or embedded ONT2. The SW1 and SW2 are optical switches, which can be replaced by a variable optical power attenuator.

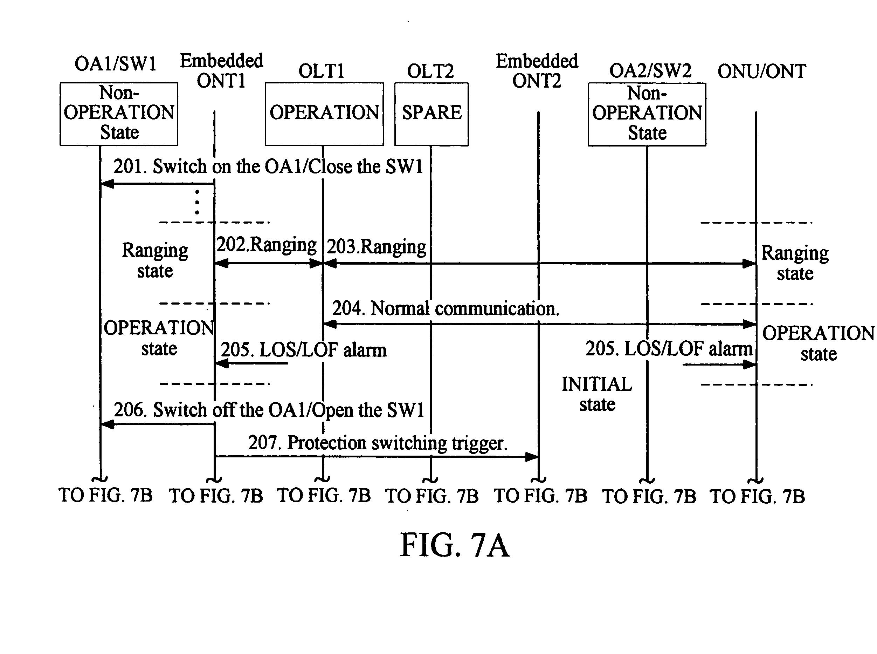

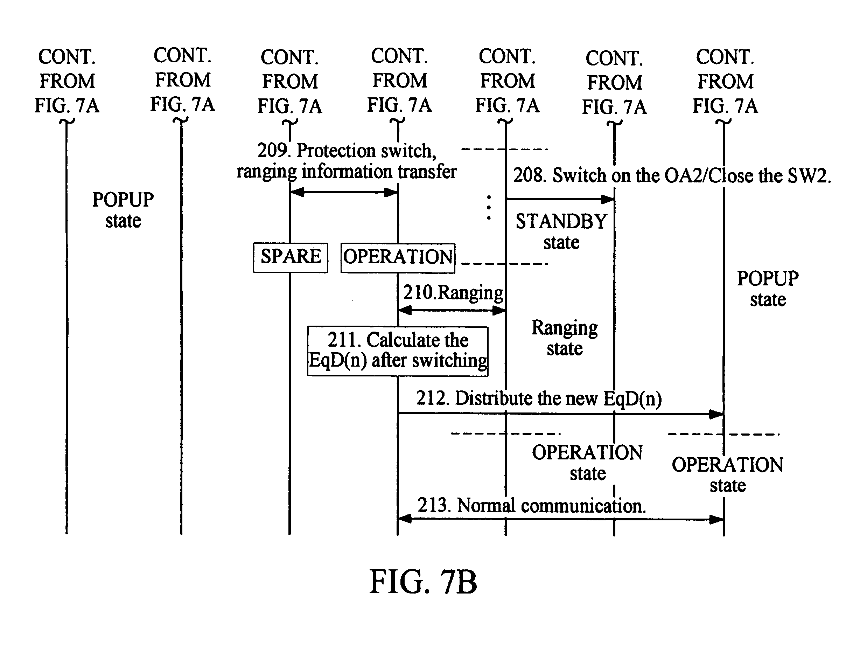

Taking the system provided in FIG. 5 or 6 for example, in this embodiment, a method for reducing a switch delay of active and standby OLTs is further provided. Referring to FIG. 7, the method includes following steps.

In step 201, the embedded ONT1 is in an active state. The OA1 is switched on/the SW1 is closed.

In steps 202 and 203, the OLT1 performs ranging on all ONU/ONTs and the embedded ONT1 in the extender box, so as to obtain an Rtd (Main, n) and an Rtd (Embedded ONT1).

In step 204, each ONU/ONT and the embedded ONT1 in the extender box enter an OPERATION state, and are in normal communication with the OLT1.

In step 205, when a failure occurs to the active backbone optical fiber or the OLT1, the ONU/ONTs under the OLT1 and the embedded ONT1 detect a loss of signal/loss of frame (LOS/LOF) alarm, and are switched from the normal OPERATION state to a POPUP state. Service transmission between the OLT1 and the ONUs is interrupted.

In step 206, the embedded ONT1 switches off the OA1/opens the SW1.

In step 207, the embedded ONT1 sends protection switching trigger to the embedded ONT2. The embedded ONT2 enters a STANDBY state from an INITIAL state.

In step 208, the embedded ONT2 switches on the OA2/closes the SW2.

In step 209, in the active and standby switching process, the OLT1 sends the ranging information such as the Rtd (Main, n) and the Rtd (Embedded ONT1) to the OLT2. Subsequently, the OLT1 is switched from the active device to the standby device, and the OLT2 is switched from the standby device to the active device. The OLT2 triggers the embedded ONT2 to enter a RANGING state.

In step 210, after the switching of the active and standby OLTs, the OLT2 performs ranging on the embedded ONT2 in the extender box, so as to obtain an Rtd (Embedded ONT2). The embedded ONT2 enters an OPERATION state after the ranging.

In step 211, the OLT2 calculates an EqD of each ONU (Spare, n) after switching according to the formula EqD (Spare, n) = Teqd (Spare) - {Rtd (Main, n) - [Rtd (Embedded ONT1) - Rtd (Embedded ONT2)]}.

In step 212, the OLT2 distributes the EqD (Spare, n) to each ONU/ONT.

In step 213, each ONU/ONT enters the OPERATION state, and is in normal communication with the OLT2.

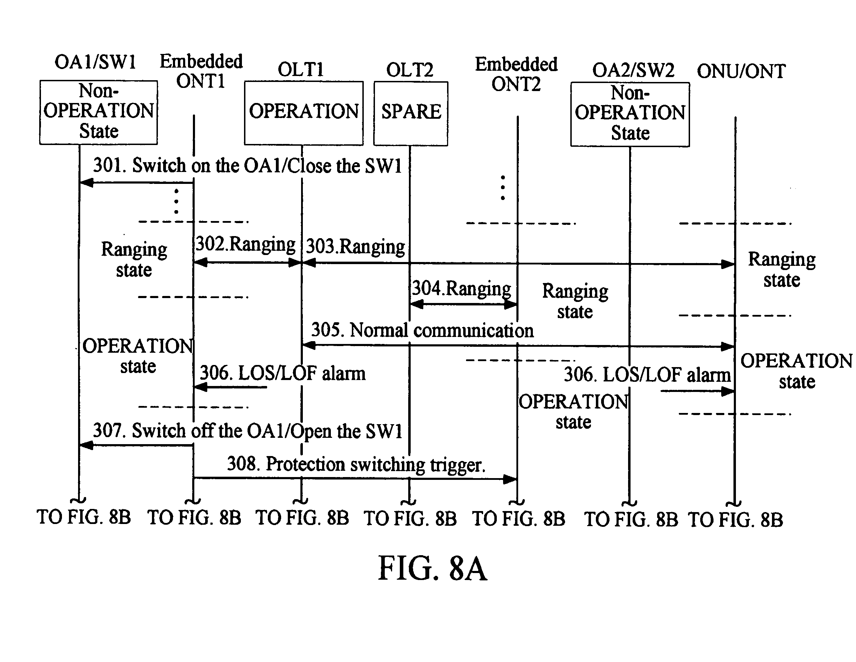

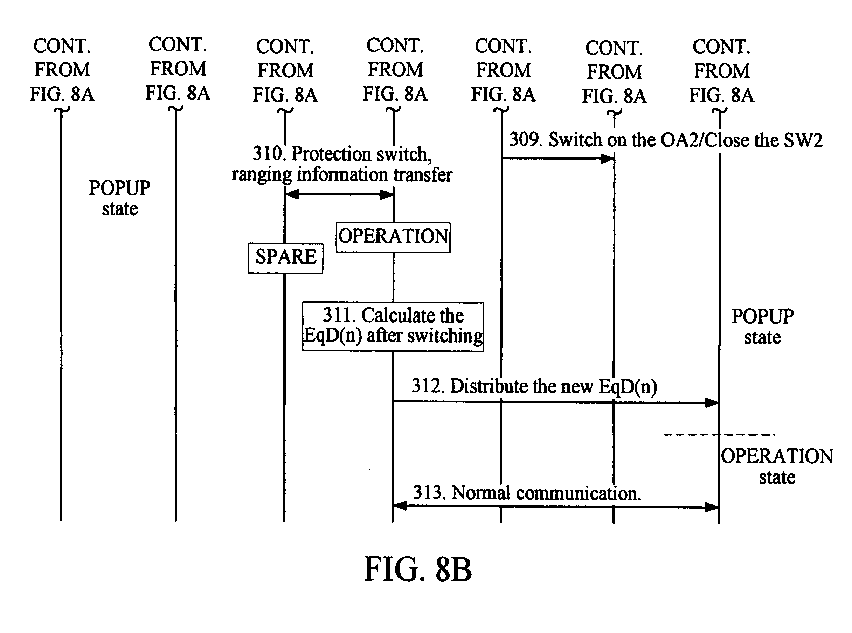

Furthermore, the process that the OLT2 performs ranging on the embedded ONT2 in the extender box to obtain the Rtd (Embedded ONT2) can be performed any time before the switching. After the switching, no ranging process is needed. Referring to FIG. 8, taking the system provided in FIG. 5 or 6 as an example, another method for reducing a switch delay of active and standby OLTs in this embodiment is further provided. The method includes following steps.

In step 301, the embedded ONU1 is in an active state. The OA1 is switched on/the SW1 is closed.

In steps 302 to 303, the OLT1 performs ranging on all ONU/ONTs and the embedded ONT1 in the extender box, so as to obtain an Rtd (Main, n) and an Rtd (Embedded ONT1).

In step 304, before the switching, the OLT2 performs ranging on the embedded ONT2 in the extender box, so as to obtain an Rtd (Embedded ONT2). At this time, the OA2/SW2 is in a non-OPERATION state.

In step 305, each ONU/ONT and the embedded ONT1 in the extender box enter an OPERATION state, and are in normal communication with the OLT1.

In step 306, when a failure occurs to the active backbone optical fiber or the OLT1, the ONU/ONTs under the OLT1 and the embedded ONU1 are switched from a normal OPERATION state to a POPUP state due to detection of a LOS/LOF alarm. The service transmission between the OLT1 and the ONUs is interrupted.

In step 307, the embedded ONT1 switches off the OA1/opens the SW1.

In step 308, the embedded ONT1 sends protection switching trigger to the embedded ONT2. The embedded ONT2 enters a STANDBY state from an INITIAL state.

In step 309, the embedded ONT2 switches on the OA2/closes the SW2.

In step 310, in the active and standby switching process, the OLT1 sends ranging information such as the Rtd (Main, n) and the Rtd (Embedded ONT1) to the OLT2. Subsequently, the OLT1 is switched from the active device to the standby device. The OLT2 is switched from the standby device to the active device. The OLT2 triggers the embedded ONT2 to enter the RANGING state.

In step 311, after the switching of the active and standby OLTs, the OLT2 calculates an EqD of each ONU/ONT (Spare, n) after switching according to the formula EqD (Spare, n) = Teqd (Spare) - {Rtd (Main, n) - [Rtd (Embedded ONT1) - Rtd (Embedded ONT2)]}.

In step 312, the OLT2 distributes the EqD (Spare, n) to each ONU/ONT.

In step 313, each ONU/ONT enters an OPERATION state, and is in normal communication with the OLT2.

Besides the systems for reducing a switch delay of active and standby OLTs provided in Figures 3, 5, and 6, the present invention further provides the following systems. In these systems, a specific structure of the extender box is slightly different, which will be briefly illustrated as follows.

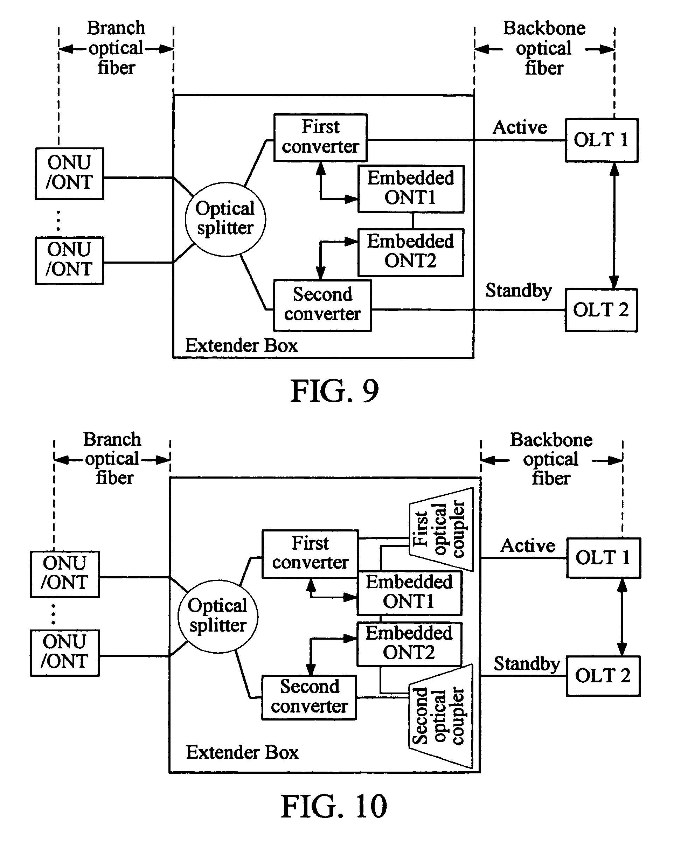

1) Referring to the system provided in FIG. 9, besides the embedded ONT1 and the embedded ONT2, the extender box in the system further includes an optical splitter connecting a plurality of ONUs, a first converter, and a second converter.

The optical splitter is adapted to converge optical signals sent by a plurality of ONUs into one optical signal and split an optical signal sent by the first converter or second converter into multiple optical signals. The multiple optical signals are sent to the plurality of ONUs respectively.

The first converter and the second converter are adapted to convert the received optical signals into electrical signals and process the electrical signals, and convert the processed electrical signals into new optical signals and forward the new optical signals. The first converter and the second converter are further adapted to forward the received ranging message and ranging response message to the corresponding device. For example, the first converter forwards the ranging message sent by the OLT1 to the embedded ONT1 and returns the ranging response message of the embedded ONT1 to the OLT11, and the second converter forwards the ranging message sent by the OLT2 to the embedded ONT2 and returns the ranging response message of the embedded ONT2 to the OLT2.

When the system provided in FIG. 9 is used to perform steps 201 to 213 or 301 to 313, the steps of switching on the amplifiers OAs/closing the switches SWs need to be replaced by switching on corresponding converters, and the steps of switching off the amplifiers OAs/opening the switches SWs need to be replaced by switching off corresponding converters. The details will not be described herein.

2) Different from the system provided in FIG. 5, in the system provided in FIG. 10, the first amplifier in the extender box is replaced by a first converter, and the second amplifier is replaced by a second converter.

The first converter and the second converter are specifically adapted to perform electrical conversion on the received uplink optical signals (optical signals sent from the OLTs to the ONUs), process the converted electrical signals, and convert the electrical signals into optical signals again. The first converter and the second converter are further adapted to amplify the downlink optical signals (optical signals sent from the ONUs to the OLTs), which can be specifically realized by using an optical-electrical-optical converter and an amplifier.

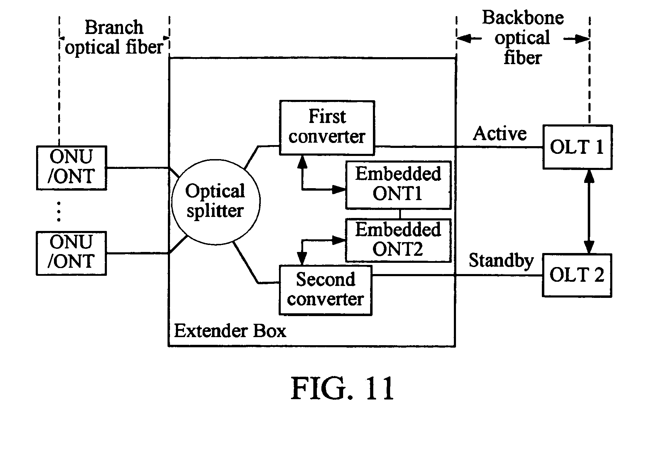

3) Different from the system in FIG. 10, in the system provide in FIG. 11, the extender box has no optical coupler and functions for converting signals of the first converter and second converter are slightly different. The first converter and the second converter are specifically adapted to perform electrical conversion on the received downlink optical signals (optical signals sent from the ONUs to the OLTs), process the converted electrical signals, and convert the electrical signals into optical signals again. The first converter and the second converter are further adapted to amplify uplink optical signals (optical signals sent from the OLTs to the ONUs), which can be specifically realized by using an optical-electrical-optical converter and an amplifier. In the system, the first converter and second converter send a part of the optical signals to the embedded ONT1 or embedded ONT2. The details will not be described herein.

In the foregoing system, the optical splitter inside the extender box can also be omitted. The optical splitter can be disposed outside the extender box and serve as an independent device, with the function unchanged. The details will not be described herein.

Specifically, in the system as shown in FIG. 3, 5, 6, 9, 10 or 11, the active embedded ONT in the extender box is connected to the active OLT through the active backbone optical fiber, and is adapted to receive the ranging message sent by the active OLT and return the ranging response message of the active OLT, so as to provide the second Rtd for the active OLT.

The standby embedded ONT in the extender box is connected to the standby OLT through the standby backbone optical fiber, and is adapted to receive the ranging message sent by the standby OLT and return the ranging response message of the standby OLT, so as to provide the third Rtd for the standby OLT.

Optionally, the active embedded ONT and the standby embedded ONT may be combined into one embedded ONT.

The active OLT is adapted to send the pre-obtained first Rtd to each ONU and the second Rtd to the active embedded ONT to the standby OLT during the switching of the active OLT and standby OLT.

The standby OLT is adapted to obtain a control delay of each ONU according to the preset equalized loop delay, the pre-obtained third Rtd to the standby embedded ONT, the first Rtd, and the second Rtd, and distribute the control delay of each ONU to the corresponding ONU.

The third Rtd can be obtained before the switching of the standby OLT and the active OLT or after the switching of the standby OLT and the active OLT.

Furthermore, in an embodiment, the present invention further provides an extender box, which includes an active embedded ONT and a standby embedded ONT.

The active embedded ONT is adapted to send an Rtd from an active OLT to an active embedded ONT to the active OLT by returning a ranging response message to the active OLT after receiving a ranging message sent by the active OLT.

The standby embedded ONT is adapted to send an Rtd from a standby OLT to a standby embedded ONT to the standby OLT by returning a ranging response message to the standby OLT after receiving a ranging message sent by the standby OLT.

The active embedded ONT and the standby embedded ONT can be combined into one embedded ONT.

The Rtd from the active OLT to the active embedded ONT and the Rtd from the standby OLT to the standby embedded ONT are used as references for control delays distributed to the ONUs after the switching of the active OLT and the standby OLT.

The specific structure of the extender box is the same as that of the extender box in the system as shown in FIG. 3, 5, 6, 9, 10 or 11, and the details will not be described herein.

The extender box in the foregoing embodiment can also be replaced by other devices in the transmission path, and the process for the ranging is not changed. The details will not be described herein.

In the embodiments, embedded ONTs that support a fast ranging function are introduced in the extender box in the transmission path, so that the ranging process of the ONUs becomes unnecessary when the transmission path between the ONUs and the OLT is switched to a protection backbone optical fiber when a failure occurs to the active backbone optical fiber, thus greatly reducing the switch delay of the active and standby OLTs, so as to satisfy the demand for a switch delay shorter than 50 ms in an LR-PON system, ensure normal services, and improve the user experience.

All or part of the technical solution provided in the embodiments of the present invention may be implemented by software programming. The software program may be stored in a readable storage medium, such as a hard disk, a compact disk, or a floppy disk.

The above descriptions are merely preferred embodiments of the present invention, but not intended to limit the scope of the present invention.

## Claims

1. A method for reducing a switch delay of active and standby optical line terminals OLTs, wherein:

    an active embedded optical network terminal, ONT, and a standby embedded ONT are configured in an extender box in an optical transmission path between the active and standby OLTs and a plurality of optical network units, ONUs, the active embedded ONT and the standby embedded ONT supporting a ranging function, the active embedded ONT is connected to the active OLT through an active backbone optical fiber, and the standby embedded ONT is connected to the standby OLT through a standby backbone optical fiber, the method comprising:
    receiving (101), by the standby OLT, first round trip delays, Rtds, to the ONUs and a second Rtd to the active embedded ONT from the active OLT, wherein the first Rtds and the second Rtd are pre-obtained by the active OLT through ranging on the ONUs and the active embedded ONT respectively;
    during switching of the standby OLT and the active OLT, obtaining (103), by the standby OLT, control delays of the ONUs according to a preset equalized loop delay, a pre-obtained third Rtd to the standby embedded ONT, the first Rtds, and the second Rtd wherein the third Rtd is pre-obtained by the standby OLT through ranging on the standby embedded ONT; and
    distributing (104), by the standby OLT, the control delays to the corresponding ONUs.

2. The method for reducing a switch delay of active and standby OLTs according to claim 1, wherein the third Rtd is obtained by the standby OLT from the standby embedded ONT before the switching of the standby OLT and the active OLT.

3. The method for reducing a switch delay of active and standby OLTs according to claim 1, wherein the third Rtd is obtained by the standby OLT from the standby embedded ONT after the switching of the standby OLT and the active OLT.

4. The method for reducing a switch delay of active and standby OLTs according to claim 1, wherein the obtaining the control delays of the ONUs according to the preset equalized loop delay, the pre-obtained third Rtd to the standby embedded ONT, the first Rtds, and the second Rtd is implemented according to a following formula:

    the control delay of the ONU = the preset equalized loop delay - [the first Rtd of the corresponding ONU the second Rtd - the third Rtd].

5. The method for reducing a switch delay of active and standby OLTs according to claim 1, wherein the active embedded ONT and the standby embedded ONT are combined into one embedded ONT.

6. A system for reducing a switch delay of active and standby optical line terminals, OLTs, comprising an active OLT, a standby OLT, an extender box, and a plurality of optical network units, ONUs, wherein:

the extender box comprises an active embedded optical network terminal, ONT, and a standby embedded ONT, the active embedded ONT and the standby embedded ONT supporting a ranging function, the active embedded ONT is connected to the active OLT through an active backbone optical fiber, and the standby embedded ONT is connected to the standby OLT through a standby backbone optical fiber;

the active OLT is adapted to perform ranging on the ONUs and the active embedded ONT to pre-obtain first round trip delays, Rtds, to the ONUs and a second Rtd to the active embedded ONT respectively, and send the pre-obtained first Rtds and second Rtd to the standby OLT during switching of the active OLT and standby OLT; and

the standby OLT is adapted to receive the first Rtds and the second Rtd from the active OLT, perform ranging on the standby embedded ONT to pre-obtain a third Rtd to the standby embedded ONT, obtain control delays of the ONUs according to a preset equalized loop delay, the pre-obtained third Rtd, the first Rtds, and the second Rtd, and distribute the control delays to the corresponding ONUs.

7. The system for reducing a switch delay of active and standby OLTs according to claim 6, wherein the active embedded ONT is adapted to return a ranging response message to the active OLT after receiving a ranging message sent by the active OLT, so as to provide the second Rtd for the active OLT, and the standby embedded ONT is adapted to return a ranging response message to the standby OLT after receiving a ranging message sent by the standby OLT, so as to provide the third Rtd for the standby OLT.

8. The system for reducing a switch delay of active and standby OLTs according to claim 7, wherein the third Rtd is obtained by the standby OLT before the standby OLT and the active OLT are switched.

9. The system for reducing a switch delay of active and standby OLTs according to claim 7, wherein the third Rtd is obtained by the standby OLT after the standby OLT and the active OLT are switched.

10. The system for reducing a switch delay of active and standby OLTs according to claim 7, wherein the active embedded ONT and the standby embedded ONT are combined into one embedded ONT.

11. The system for reducing a switch delay of active and standby OLTs according to claim 6, wherein the control delay of the ONU is obtained by the standby OLT according to the following formula:

$$\text{the control delay of the ONU} = \text{the preset equalized loop delay} - [\text{the first Rtd of the corresponding ONU} - [\text{the second Rtd} - \text{the third Rtd}]].$$

12. The system for reducing a switch delay of active and standby OLTs according to any one of claims 6-11, wherein the extender box further comprises an optical splitter connecting the plurality of ONUs, a first converter, and a second converter, wherein

the optical splitter is adapted to converge optical signals sent by the plurality of ONUs into one optical signal, split an optical signal sent by the first converter or the second converter into multiple optical signals, and send the multiple optical signals to the plurality of ONUs respectively; and

the first converter and the second converter are adapted to convert the received optical signals into electrical signals, process the electrical signals, convert the processed electrical signals into new optical signals, forward the new optical signals, and forward the received ranging message and ranging response message to a corresponding device.

13. The system for reducing a switch delay of active and standby OLTs according to any one of claims 6-11, wherein the extender box further comprises an optical splitter connecting the plurality of ONUs, a first amplifier, a second amplifier, a first optical coupler, and a second optical coupler, wherein

the optical splitter is adapted to converge optical signals sent by the plurality of ONUs into one optical signal, split an optical signal sent by the first amplifier or the second amplifier into multiple optical signals, and send the multiple optical signals to the plurality of ONUs respectively;

the first amplifier is connected to the optical splitter, the first optical coupler, and the active embedded ONT;
the second amplifier is connected to the optical splitter, the second optical coupler, and the standby embedded ONT,;
the first optical coupler is adapted to couple the received optical signals and send a part of the coupled optical signals to the active embedded ONT; and
the second optical coupler is adapted to couple the received optical signals and send a part of the coupled optical signals to the standby embedded ONT.

14. The system for reducing a switch delay of active and standby OLTs according to any one of claims 6-11, wherein the extender box further comprises an optical splitter connecting the plurality of ONUs, an amplifier, a first switch, a second switch, a first optical coupler, and a second optical coupler, wherein
the optical splitter is adapted to converge optical signals sent by the plurality of ONUs into one optical signal, split an optical signal sent by the amplifier into multiple optical signals, and send the multiple optical signals to the plurality of ONUs respectively;
the amplifier is connected to the optical splitter, the first switch, the second switch, the active embedded ONT, and the standby embedded ONT, and is adapted to amplify the received optical signals and forward the amplified optical signals;
the active embedded ONT is further adapted to drive the first switch to be closed when the active backbone optical fiber is normal;
the standby embedded ONT is further adapted to drive the second switch to be closed when a failure occurs to the active backbone optical fiber;
the first optical coupler is adapted to couple the received optical signals and send a part of the coupled optical signals to the active embedded ONT; and
the second optical coupler is adapted to couple the received optical signals and send a part of the coupled optical signals to the standby embedded ONT.

**Patentansprüche**

1. Verfahren zum Verringern einer Schaltverzögerung aktiver und im Standby befindlicher Endgeräte optischer Leitungen, OLTs, wobei:

ein aktives eingebettetes Endgerät eines optischen Netzes, ONT, und ein im Standby befindliches eingebettetes ONT in einem Erweiterungskasten in einem optischen Übertragungsweg zwischen den aktiven und den im Standby befindlichen OLTs und mehreren optischen Netzeinheiten, ONUs, konfiguriert sind, wobei das aktive eingebettete ONT und das im Standby befindliche eingebettete ONT eine Ortungsfunktion unterstützen, wobei das aktive eingebettete ONT durch eine aktive optische Backbone-Faser mit dem aktiven OLT verbunden ist und das im Standby befindliche eingebettete ONT durch eine im Standby befindliche optische Backbone-Faser mit dem im Standby befindlichen OLT verbunden ist, wobei das Verfahren Folgendes umfasst:

Empfangen (101), durch das im Standby befindliche OLT, erster Umlaufverzögerungen, Rtds, zu den ONUs und einer zweiten Rtd zu dem aktiven eingebetteten ONT von dem aktiven OLT, wobei die ersten Rtds und die zweite Rtd durch Ortung an den ONUs bzw. dem aktiven eingebetteten ONT durch das aktive OLT im Voraus erhalten werden;
während des Schaltens des im Standby befindlichen OLTs und des aktiven OLTs, Erhalten (103) durch das im Standby befindliche OLT von Steuerverzögerungen der ONUs in Übereinstimmung mit einer vorgegebenen ausgeglichenen Schleifenverzögerung, einer im Voraus erhaltenen dritten Rtd zu dem im Standby befindlichen eingebetteten ONT, den ersten Rtds und der zweiten Rtd, wobei die dritte Rtd durch das im Standby befindliche OLT durch Ortung an dem im Standby befindlichen eingebetteten ONT im Voraus erhalten wird; und
Verteilen (104) der Steuerverzögerungen durch das im Standby befindliche OLT an die entsprechenden ONUs.

2. Verfahren zum Verringern einer Schaltverzögerung aktiver und im Standby befindlicher OLTs nach Anspruch 1, wobei die dritte Rtd durch das im Standby befindliche OLT vor dem Schalten des im Standby befindlichen OLTs und des aktiven OLTs von dem im Standby befindlichen eingebetteten ONT erhalten wird.

3. Verfahren zum Verringern einer Schaltverzögerung aktiver und im Standby befindlicher OLTs nach Anspruch 1, wobei die dritte Rtd durch das im Standby befindliche OLT nach dem Schalten des im Standby befindlichen OLTs und des aktiven OLTs von dem im Standby befindlichen eingebetteten ONT erhalten wird.

4. Verfahren zum Verringern einer Schaltverzögerung aktiver und im Standby befindlicher OLTs nach Anspruch 1, wobei das Erhalten der Steuerverzögerungen der ONUs in Übereinstimmung mit der vorgegebenen ausgeglichenen Schleifenverzögerung, der im Voraus erhaltenen dritten Rtd zu dem im Standby befindlichen eingebetteten ONT, der ersten Rtd und der zweiten Rtd in Übereinstimmung mit einer folgenden Formel implementiert ist:

die Steuerverzögerung der ONU = die vorgegebene ausgeglichene Schleifenverzögerung - [die erste Rtd der entsprechenden ONU - [die zweite Rtd - die dritte Rtd]].

5. Verfahren zum Verringern einer Schaltverzögerung aktiver und im Standby befindlicher OLTs nach Anspruch 1, wobei das aktive eingebettete ONT und das im Standby befindliche eingebettete ONT in einem eingebetteten ONT kombiniert sind.

6. System zum Verringern einer Schaltverzögerung aktiver und im Standby befindlicher Endgeräte optischer Leitungen, OLTs, das ein aktives OLT, ein im Standby befindliches OLT, einen Erweiterungskasten und mehrere optische Netzeinheiten, ONUs, umfasst, wobei:

der Erweiterungskasten ein aktives eingebettetes Endgerät eines optischen Netzes, ONT, und ein im Standby befindliches eingebettetes ONT umfasst, wobei das aktive eingebettete ONT und das im Standby befindliche eingebettete ONT eine Ortungsfunktion unterstützen, wobei das aktive eingebettete ONT durch eine aktive optische Backbone-Faser mit dem aktiven OLT verbunden ist und das im Standby befindliche eingebettete ONT durch eine im Standby befindliche optische Backbone-Faser mit dem im Standby befindlichen OLT verbunden ist;
das aktive OLT dafür ausgelegt ist, eine Ortung an den ONUs und dem aktiven eingebetteten ONT auszuführen, um erste Umlaufverzögerungen, Rtds, zu den ONUs bzw. eine zweite Rtd zu dem aktiven eingebetteten ONT im Voraus zu erhalten und die im Voraus erhaltenen ersten Rtds und die im Voraus erhaltene zweite Rtd während des Schaltens des aktiven OLTs und des im Standby befindlichen OLTs an das im Standby befindliche OLT zu senden; und
das im Standby befindliche OLT dafür ausgelegt ist, die ersten Rtds und die zweite Rtd von dem aktiven OLT zu empfangen, eine Ortung an dem im Standby befindlichen eingebetteten ONT auszuführen, um eine dritte Rtd zu dem im Standby befindlichen eingebetteten ONT im Voraus zu erhalten, die Steuerverzögerungen der ONUs in Übereinstimmung mit einer vorgegebenen ausgeglichenen Schleifenverzögerung, der im Voraus erhaltenen dritten Rtd, den ersten Rtds und der zweiten Rtd zu erhalten und die Steuerverzögerungen an die entsprechenden ONUs zu verteilen.

7. System zum Verringern einer Schaltverzögerung aktiver und im Standby befindlicher OLTs nach Anspruch 6, wobei das aktive eingebettete ONT dafür ausgelegt ist, nach dem Empfangen einer durch das aktive OLT gesendeten Ortungsnachricht eine Ortungs-Antwortnachricht an das aktive OLT zurückzuschicken, um die zweite Rtd für das aktive OLT bereitzustellen, und
das im Standby befindliche eingebettete ONT dafür ausgelegt ist, nach dem Empfangen einer durch das im Standby befindliche OLT gesendeten Ortungsnachricht eine Ortungs-Antwortnachricht an das im Standby befindliche OLT zurückzuschicken, um die dritte Rtd für das im Standby befindliche OLT bereitzustellen.

8. System zum Verringern einer Schaltverzögerung aktiver und im Standby befindlicher OLTs nach Anspruch 7, wobei die dritte Rtd durch das im Standby befindliche OLT erhalten wird, bevor das im Standby befindliche OLT und das aktive OLT geschaltet werden.

9. System zum Verringern einer Schaltverzögerung aktiver und im Standby befindlicher OLTs nach Anspruch 7, wobei die dritte Rtd durch das im Standby befindliche OLT erhalten wird, nachdem das im Standby befindliche OLT und das aktive OLT geschaltet worden sind.

10. System zum Verringern einer Schaltverzögerung aktiver und im Standby befindlicher OLTs nach Anspruch 7, wobei das aktive eingebettete ONT und das im Standby befindliche eingebettete ONT in einem eingebetteten ONT kombiniert sind.

11. System zum Verringern einer Schaltverzögerung aktiver und im Standby befindlicher OLTs nach Anspruch 6, wobei die Steuerverzögerung der ONU durch das im Standby befindliche OLT in Übereinstimmung mit der folgenden Formel erhalten wird:

die Steuerverzögerung der ONU = die vorgegebene ausgeglichene Schleifenverzögerung - [die erste Rtd der entsprechenden ONU - [die zweite Rtd - die dritte Rtd]].

12. System zum Verringern einer Schaltverzögerung aktiver und im Standby befindlicher OLTs nach einem der Ansprüche 6-11, wobei der Erweiterungskasten ferner einen optischen Teiler, der mit den mehreren ONUs verbunden ist, einen ersten Umsetzer und einen zweiten Umsetzer umfasst, wobei

der optische Teiler dafür ausgelegt ist, die durch die mehreren ONUs gesendeten optischen Signale in ein optisches Signal zu konvergieren, ein durch den ersten Umsetzer oder den zweiten Umsetzer gesendetes optisches Signal in mehrere optische Signale zu teilen und die mehreren optischen Signale jeweils an die mehreren ONUs zu senden; und

der erste Umsetzer und der zweite Umsetzer dafür ausgelegt sind, die empfangenen optischen Signale in elektrische Signale umzusetzen, die elektrischen Signale zu verarbeiten, die verarbeiteten elektrischen Signale in neue optische Signale umzusetzen, die neuen optischen Signale weiterzuleiten und die empfangene Ortungsnachricht und die empfangene Ortungs-Antwortnachricht an eine entsprechende Vorrichtung weiterzuleiten.

13. System zum Verringern einer Schaltverzögerung aktiver und im Standby befindlicher OLTs nach einem der Ansprüche 6-11, wobei der Erweiterungskasten ferner einen optischen Teiler, der mit den mehreren ONUs verbunden ist, einen ersten Verstärker, einen zweiten Verstärker, einen ersten optischen Koppler und einen zweiten optischen Koppler umfasst, wobei

der optische Teiler dafür ausgelegt ist, die durch die mehreren ONUs gesendeten optischen Signale in ein optisches Signal zu konvergieren, ein durch den ersten Verstärker oder den zweiten Verstärker gesendetes optisches Signal in mehrere optische Signale zu teilen und die mehreren optischen Signale jeweils an die mehreren ONUs zu senden; und

der erste Verstärker mit dem optischen Teiler, dem ersten optischen Koppler und dem aktiven eingebetteten ONT verbunden ist;

der zweite Verstärker mit dem optischen Teiler, dem zweiten optischen Koppler und dem im Standby befindlichen eingebetteten ONT verbunden ist;

der erste optische Koppler dafür ausgelegt ist, die empfangenen optischen Signale zu koppeln und einen Teil der gekoppelten optischen Signale an das aktive eingebettete ONT zu senden; und

der zweite optische Koppler dafür ausgelegt ist, die empfangenen optischen Signale zu koppeln und einen Teil der gekoppelten optischen Signale an das im Standby befindliche eingebettete ONT zu senden.

14. System zum Verringern einer Schaltverzögerung aktiver und im Standby befindlicher OLTs nach einem der Ansprüche 6-11, wobei der Erweiterungskasten ferner einen optischen Teiler, der mit den mehreren ONUs verbunden ist, einen Verstärker, einen ersten Schalter, einen zweiten Schalter, einen ersten optischen Koppler und einen zweiten optischen Koppler umfasst, wobei

der optische Teiler dafür ausgelegt ist, die durch die mehreren ONUs gesendeten optischen Signale in ein optisches Signal zu konvergieren, ein durch den Verstärker gesendetes optisches Signal in mehrere optische Signale zu teilen und die mehreren optischen Signale jeweils an die mehreren ONUs zu senden;

der Verstärker mit dem optischen Teiler, dem ersten Schalter, dem zweiten Schalter, dem aktiven eingebetteten ONT und dem im Standby befindlichen eingebetteten ONT verbunden ist und dafür ausgelegt ist, die empfangenen optischen Signale zu verstärken und die verstärkten optischen Signale weiterzuleiten;

das aktive eingebettete ONT ferner dafür ausgelegt ist, den ersten Schalter anzusteuern, damit er geschlossen ist, wenn die aktive optische Backbone-Faser normal ist;

das im Standby befindliche eingebettete ONT ferner dafür ausgelegt ist, den zweiten Schalter anzusteuern, damit er geschlossen ist, wenn in der aktiven optischen Backbone-Faser eine Störung auftritt;

der erste optische Koppler dafür ausgelegt ist, die empfangenen optischen Signale zu koppeln und einen Teil der gekoppelten optischen Signale an das aktive eingebettete ONT zu senden; und

der zweite optische Koppler dafür ausgelegt ist, die empfangenen optischen Signale zu koppeln und einen Teil der gekoppelten optischen Signale an das im Standby befindliche eingebettete ONT zu senden.

**Revendications**

1. Procédé de réduction d'un retard de commutation de terminaux de ligne optique, OLT, actif et de secours, dans lequel :

   un terminal de réseau optique, ONT, intégré actif, et un ONT intégré de secours sont configurés dans un boîtier d'extension dans un chemin de transmission optique entre les OLT actif et de secours et une pluralité d'unités de réseau optique, ONU, l'ONT intégré actif et l'ONT intégré de secours supportant une fonction de mesure de distance, l'ONT intégré actif est connecté à l'OLT actif par le biais d'une fibre optique fédératrice active, et l'ONT intégré de secours est connecté à l'OLT de secours par le biais d'une fibre optique fédératrice de secours, le procédé comprenant :

   la réception (101), par l'OLT de secours, de premiers temps de transmission aller-retour, Rtd, jusqu'aux ONU et d'un deuxième Rtd jusqu'à l'ONT intégré actif depuis l'OLT actif, les premiers Rtd et le deuxième Rtd étant préobtenus par l'OLT actif par mesure de distance sur les ONU et l'ONT intégré actif respectivement ;
   durant la commutation de l'OLT de secours et de l'OLT actif, l'obtention (103), par l'OLT de secours, de retards de commande des ONU en fonction d'un retard de boucle égalisé préétabli, d'un troisième Rtd préobtenu jusqu'à l'ONT intégré de secours, des premiers Rtd, et du deuxième Rtd, le troisième Rtd étant préobtenu par l'OLT de secours par mesure de distance sur l'ONT intégré de secours ; et
   la distribution (104), par l'OLT de secours, des retards de commande aux ONU correspondantes.

2. Procédé de réduction d'un retard de commutation d'OLT actif et de secours selon la revendication 1, dans lequel le troisième Rtd est obtenu par l'OLT de secours depuis l'ONT intégré de secours avant la commutation de l'OLT de secours et de l'OLT actif.

3. Procédé de réduction d'un retard de commutation d'OLT actif et de secours selon la revendication 1, dans lequel le troisième Rtd est obtenu par l'OLT de secours depuis l'ONT intégré de secours après la commutation de l'OLT de secours et de l'OLT actif.

4. Procédé de réduction d'un retard de commutation d'OLT actif et de secours selon la revendication 1, dans lequel l'obtention des retards de commande des ONU en fonction du retard de boucle égalisé préétabli, du troisième Rtd préobtenu jusqu'à l'ONT intégré de secours, des premiers Rtd, et du deuxième Rtd est mise en oeuvre en fonction de la formule suivante :

$$\text{retard de commande de l'ONU} = \text{retard de boucle égalisé préétabli} - [\text{premier Rtd de l'ONU correspondante} - [\text{deuxième Rtd - troisième Rtd}]].$$

5. Procédé de réduction d'un retard de commutation d'OLT actif et de secours selon la revendication 1, dans lequel l'ONT intégré actif et l'ONT intégré de secours sont combinés en un même ONT intégré.

6. Procédé de réduction d'un retard de commutation de terminaux de ligne optique, OLT, actif et de secours, comprenant un OLT actif, un OLT de secours, un boîtier d'extension, et une pluralité d'unités de réseau optique, ONU, dans lequel :

   le boîtier d'extension comprend un terminal de réseau optique, ONT, intégré actif, et un ONT intégré de secours, l'ONT intégré actif et l'ONT intégré de secours supportant une fonction de mesure de distance, l'ONT intégré actif est connecté à l'OLT actif par le biais d'une fibre optique fédératrice active, et l'ONT intégré de secours est connecté à l'OLT de secours par le biais d'une fibre optique fédératrice de secours ;
   l'OLT actif est adapté pour effectuer une mesure de distance sur les ONU et l'ONT intégré actif afin de préobtenir des premiers temps de transmission aller-retour, Rtd, jusqu'aux ONU et un deuxième Rtd jusqu'à l'ONT intégré actif respectivement, et envoyer les premiers Rtd et le deuxième Rtd préobtenus à l'OLT de secours durant la commutation de l'OLT actif et de l'OLT de secours ; et
   l'OLT de secours est adapté pour recevoir les premiers Rtd et le deuxième Rtd depuis l'OLT actif, effectuer une mesure de distance sur l'ONT intégré de secours afin de préobtenir un troisième Rtd jusqu'à l'ONT intégré de secours, obtenir des retards de commande des ONU en fonction d'un retard de boucle égalisé préétabli, du troisième Rtd préobtenu, des premiers Rtd et du deuxième Rtd, et distribuer les retards de commande aux ONU correspondantes.

**7.** Système de réduction d'un retard de commutation d'OLT actif et de secours selon la revendication 6, dans lequel l'ONT intégré actif est adapté pour renvoyer un message de réponse de mesure de distance à l'OLT actif après réception d'un message de mesure de distance envoyé par l'OLT actif, de façon à fournir le deuxième Rtd de l'OLT actif, et
l'ONT intégré de secours est adapté pour renvoyer un message de réponse de mesure de distance à l'OLT de secours après réception d'un message de mesure de distance envoyé par l'OLT de secours, de façon à fournir le troisième Rtd à l'OLT de secours.

**8.** Système de réduction d'un retard de commutation d'OLT actif et de secours selon la revendication 7, dans lequel le troisième Rtd est obtenu par l'OLT de secours avant la commutation de l'OLT de secours et de l'OLT actif.

**9.** Système de réduction d'un retard de commutation d'OLT actif et de secours selon la revendication 7, dans lequel le troisième Rtd est obtenu par l'OLT de secours après la commutation de l'OLT de secours et de l'OLT actif.

**10.** Système de réduction d'un retard de commutation d'OLT actif et de secours selon la revendication 7, dans lequel l'ONT intégré actif et l'ONT intégré de secours sont combinés en un même ONT intégré.

**11.** Système de réduction d'un retard de commutation d'OLT actif et de secours selon la revendication 6, dans lequel le retard de commande de l'ONU est obtenu par l'OLT de secours en fonction de la formule suivante :

$$\text{retard de commande de l'ONU} = \text{retard de boucle égalisé préétabli} - [\text{premier Rtd de l'ONU correspondante} - [\text{deuxième Rtd - troisième Rtd}]].$$

**12.** Système de réduction d'un retard de commutation d'OLT actif et de secours selon l'une quelconque des revendications 6 à 11, dans lequel le boîtier d'extension comprend en outre un diviseur optique connectant la pluralité d'ONU, un premier convertisseur, et un second convertisseur, dans lequel
le diviseur optique est adapté pour converger les signaux optiques envoyés par la pluralité d'ONU en un même signal optique, diviser un signal optique envoyé par le premier convertisseur ou le second convertisseur en de multiples signaux optiques, et envoyer les multiples signaux optiques à la pluralité d'ONU respectivement ; et
le premier convertisseur et le second convertisseur sont adaptés pour convertir les signaux optiques reçus en signaux électriques, traiter les signaux électriques, convertir les signaux électriques traités en nouveaux signaux optiques, acheminer les nouveaux signaux optiques, et acheminer le message de mesure de distance et le message de réponse de mesure de distance reçus jusqu'à un dispositif correspondant.

**13.** Système de réduction d'un retard de commutation d'OLT actif et de secours selon l'une quelconque des revendications 6 à 11, dans lequel le boîtier d'extension comprend en outre un diviseur optique connectant la pluralité d'ONU, un premier amplificateur, un second amplificateur, un premier coupleur optique et un second coupleur optique, dans lequel
le diviseur optique est adapté pour converger les signaux optiques envoyés par la pluralité d'ONU en un même signal optique, diviser un signal optique envoyé par le premier amplificateur ou le second amplificateur en de multiples signaux optiques, et envoyer les multiples signaux optiques à la pluralité d'ONU respectivement ; et
le premier amplificateur est connecté au diviseur optique, au premier coupleur optique et à l'ONT intégré actif ;
le second amplificateur est connecté au diviseur optique, au second coupleur optique et à l'ONT intégré de secours ;
le premier coupleur optique est adapté pour coupler les signaux optiques reçus et envoyer une partie des signaux optiques couplés à l'ONT intégré actif ; et
le second coupleur optique est adapté pour coupler les signaux optiques reçus et envoyer une partie des signaux optiques couplés à l'ONT intégré de secours.

**14.** Système de réduction d'un retard de commutation d'OLT actif et de secours selon l'une quelconque des revendications 6 à 11, dans lequel le boîtier d'extension comprend en outre un diviseur optique connectant la pluralité d'ONU, un amplificateur, un premier commutateur, un second commutateur, un premier coupleur optique et un second coupleur optique, dans lequel
le diviseur optique est adapté pour converger des signaux optiques envoyés par la pluralité d'ONU en un même signal optique, diviser un signal optique envoyé par l'amplificateur en de multiples signaux optiques, et envoyer les multiples signaux optiques à la pluralité d'ONU respectivement ;

l'amplificateur est connecté au diviseur optique, au premier commutateur, au second commutateur, à l'ONT intégré actif, et à l'ONT intégré de secours, et est adapté pour amplifier les signaux optiques reçus et acheminer les signaux optiques amplifiés ; l'ONT intégré actif est adapté en outre pour commander la fermeture du premier commutateur quand la fibre optique fédératrice active est normale ;

l'ONT intégré de secours est adapté en outre pour commander la fermeture du second commutateur quand une défaillance de la fibre optique fédératrice active se produit ; le premier coupleur optique est adapté pour coupler les signaux optiques reçus et envoyer une partie des signaux optiques couplés à l'ONT intégré actif ; et

le second coupleur optique est adapté pour coupler les signaux optiques reçus et envoyer une partie des signaux optiques couplés à l'ONT intégré de secours.

FIG. 1

EP 2 214 344 B1

ONU phase
normalized point

OLT phase
normalized point

EqD    TiO2        Teb2  Tpd    TiS2    Phase detection
point

MUX/
DMUX

E/O        S        R        O/E        PON signal
processor

EB

O/E        R        S        E/O

PON signal        Ts        TiO1        Tpd  Teb1        TiS1
processor

## FIG. 2

Branch optical fiber ←→ Backbone optical fiber →

| ONU /ONT |     | Extender Box |     | Active | OLT1 |

Embedded ONT2

Embedded ONT2

Standby

OLT 2

## FIG. 3

During switching of the OLT1 and the OLT2, the OLT1 sends the pre-obtained first Rtd to each ONU (Main, n) and second Rtd to the embedded ONT1 (Embedded ONT1) to the OLT2 — 101

Switch the OLT1 and the OLT2 — 102

The OLT2 obtains a control delay of each ONU according to a preset equalized loop delay Teqd (Spare), a third Rtd (Embedded ONT2), an Rtd (Main, n), and an Rtd (Embedded ONT1) — 103

The OLT2 distributes the control delay of the $n^{th}$ ONU to the corresponding $n^{th}$ ONU. — 104

## FIG. 4

FIG. 5

FIG. 6

FIG. 7A

OA1/SW1    Embedded ONT1    OLT1    OLT2    Embedded ONT2    OA2/SW2    ONU/ONT

Non-OPERATION State    OPERATION    SPARE    Non-OPERATION State

201. Switch on the OA1/Close the SW1

Ranging state    202.Ranging   203.Ranging    Ranging state

204. Normal communication.

OPERATION state    205. LOS/LOF alarm    205. LOS/LOF alarm    OPERATION state

INITIAL state

206. Switch off the OA1/Open the SW1

207. Protection switching trigger.

TO FIG. 7B   TO FIG. 7B   TO FIG. 7B   TO FIG. 7B   TO FIG. 7B   TO FIG. 7B   TO FIG. 7B

EP 2 214 344 B1

EP 2 214 344 B1

CONT. FROM FIG. 7A  CONT. FROM FIG. 7A  CONT. FROM FIG. 7A  CONT. FROM FIG. 7A  CONT. FROM FIG. 7A  CONT. FROM FIG. 7A  CONT. FROM FIG. 7A

POPUP state

209. Protection switch, ranging information transfer

208. Switch on the OA2/Close the SW2.

STANDBY state

SPARE   OPERATION

POPUP state

210.Ranging

211. Calculate the EqD(n) after switching

Ranging state

212. Distribute the new EqD(n)

OPERATION state

OPERATION state

213. Normal communication.

FIG. 7B

FIG. 8A

OA1/SW1  Embedded  OLT1  OLT2  Embedded  OA2/SW2  ONU/ONT
ONT1  ONT2

Non-OPERATION State    OPERATION    SPARE    Non-OPERATION State

301. Switch on the OA1/Close the SW1

Ranging state  302.Ranging  303.Ranging  Ranging state

304.Ranging  Ranging state

305. Normal communication

OPERATION state

306. LOS/LOF alarm  306. LOS/LOF alarm  OPERATION state

OPERATION state

307. Switch off the OA1/Open the SW1

308. Protection switching trigger.

TO FIG. 8B  TO FIG. 8B  TO FIG. 8B  TO FIG. 8B  TO FIG. 8B  TO FIG. 8B  TO FIG. 8B

EP 2 214 344 B1

FIG. 8B

Branch
optical
fiber

Backbone
optical
fiber

ONU
/ONT

ONU
/ONT

Optical
splitter

First
converter

Embedded
ONT1

Embedded
ONT2

Second
converter

Active

Standby

OLT 1

OLT 2

Extender Box

FIG. 9

Branch
optical
fiber

Backbone
optical
fiber

ONU
/ONT

ONU
/ONT

Optical
splitter

First
converter

First
optical
coupler

Embedded
ONT1

Embedded
ONT2

Second
converter

Second
optical
coupler

Active

Standby

OLT 1

OLT 2

Extender Box

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002071149 A